# EUROPEAN PATENT SPECIFICATION

(11) **EP 4 605 867 B1**
(45) Date of publication and mention of the grant of the patent: **30.09.2026**
(21) Application number: 23717411.5
(22) Date of filing: 27.03.2023
(51) Int. Cl.: G06Q 10/02, G06Q 30/0601, G06Q 50/12

(54) **METHOD FOR ORDERING IN-FLIGHT SERVICES IN AN AIRCRAFT, ON-BOARD COMPUTER SYSTEM FOR PROCESSING ORDERS FOR IN-FLIGHT SERVICES IN AN AIRCRAFT AND COMPUTER SYSTEM**
VERFAHREN ZUM BESTELLEN VON FLUGDIENSTEN IN EINEM FLUGZEUG, BORDCOMPUTERSYSTEM ZUM BEARBEITEN VON BESTELLUNGEN FÜR FLUGDIENSTE IN EINEM FLUGZEUG UND COMPUTERSYSTEM
PROCÉDÉ POUR COMMANDER DES SERVICES EN VOL DANS UN AÉRONEF, SYSTÈME INFORMATIQUE EMBARQUÉ POUR TRAITER DES COMMANDES POUR DES SERVICES EN VOL DANS UN AÉRONEF ET SYSTÈME INFORMATIQUE

(43) Date of publication of application: 27.08.2025
(73) Proprietor: AEROMOND Services e.U., 2345 Brunn am Gebirge (AT)
(72) Inventor: PRUCKMAIR, Sebastian, 2345 Brunn am Gebirge (AT)
(74) Representative: SONN Patentanwälte GmbH & Co KG
(86) International application number: PCT/EP2023/057839
(87) International publication number: WO 2024/199629

(56) References cited:
- US-A1- 2014 280 928
- US-A1- 2015 371 205

## Description

During commercial flights on aircrafts, passengers are usually offered a number of in-flight services by the airline. Such in-flight services typically include refreshments, food, as well as beverages, pillows, and blankets. In-flight services are often promoted in a magazine, verbally by the crew, or by means of a display, which is integrated in each seat. In case a passenger wishes to order an in-flight service, typically a member of the crew is called. The crew member then takes and processes the order. Once the passenger receives the ordered in-flight service, the passenger pays for the in-flight service. Given the limited space, time and manpower on aircrafts, this process is relatively inefficient.

For example, Lufthansa group offers and operates a "Flynet" system which is operated with active internet connection only. This system contains an online web shop called "Skydeals". Passengers get free access to this online web shop. During a flight, the passenger can access the web shop free of charge and can order products. After ordering a product, the passenger needs to enter their details (name, address, etc.). Consequently, the ordered product will be delivered to the home address of the passenger. The payment is also being completed online through the web shop platform. This system cannot be operated offline but only on aircrafts having technical provisions for active internet connection. The ordered product are not in-flight services, as the service or the product is provided after the flight.

The airline "Condor" offers and operates an in-flight entertainment system for smartphones named "SunStream Mobile Entertainment". The passenger downloads a mobile app for their mobile device prior to boarding the aircraft. The mobile App is named "Cloud10". Inside the aircraft, the passenger can open the downloaded mobile App and can connect with the aircraft's wireless "Cloud10"-Network. The passenger pays for using the offered range of in-flight-entertainment services. Once the selected service for in-flight-entertainment has been paid, the individual passenger can stream videos, listen to music and read magazines.

The airline "Eurowings" offers and operates another in-flight entertainment system for smartphones, tablets and computers that is operated online. The system is called "Wings Connect" and "Wings Entertainment" and offers products and services to the passengers such as streaming of videos, playing games, information related to the respective flight's destination airport, actual flight information and the presentation of products that are offered in their "Wings Shop" and "Wings Bistro". A passenger using this system needs to pay for services in advance.

A disadvantage of these prior art systems is that the passenger is only able to order services that are either delivered after the flight or digital services that are consumed on an electronic device of the customer. However, an in-flight service, such as a beverage, cannot be ordered. In case the electronic device is for example a stationary tablet mounted to a seat of the aircraft, the passenger might be able to order an in-flight service, but would either need to enter their payment information locally or to pay by any other means after receiving the ordered in-flight service. Stationary systems are additionally prone to failure and do not provide the same quality of user experience as an electronic device of the passenger does. In summary, current systems are either inconvenient for the passenger, the crew or are limited with respect to their application.

For example, US 2020 403 894 A1 discloses a method for facilitating in-flight services through an on-board computer system of an airplane that communicates with one or more passenger-provided devices and with one or more attendant devices. The computer system identifies and associates the user-provided device with an identity and a seat location of the passenger who brought the user-provided device. The user-provided device communicates a passenger name or ticket information that is be used to identify the passenger and the seating location of the passenger. However, it is unclear how the user-provided device gets this information. A disadvantage of this method is that any malicious third party who has access to the name of the passenger is able to order in-flight services for the passenger even against their will. Thus, the security of the method is compromised.

Further methods for ordering services in an aircraft are for example disclosed in US 8 285 309 B2, US 10 798 549 B1, US 2013 0 005 336 A1 or US 2015 0 213 566 A1.

US 2014/0280928 A1 discloses a method for facilitating in-vehicle services through attendant devices, user-provided devices, and/or an in-vehicle computer system. Passenger information relating to one or more passengers of a vehicle and service information relating to one or more services to be provided to the one or more passengers may be obtained by the attendant device from the in-vehicle computer system.

US 2015/0371205 Al discloses an automated system for facilitating sales in dynamically-changing mobile retail environments.

It is an object of the invention to eliminate or at least alleviate at least some of the disadvantages of the prior art. In particular, it is an object of the invention to provide a method, an on-board computer system and a computer system for ordering in-flight services, that provides increased security for the customer.

This object is solved by a method for ordering in-flight services in an aircraft, wherein the aircraft comprises an on-board computer system, wherein a mobile device of a passenger is connected to the on-board computer system, wherein the mobile device has access to a first passenger identifier, wherein the first passenger identifier comprises a customer number previously assigned by an app provider, comprising the following steps:
- forwarding an order of at least one in-flight service and the first passenger identifier to the on-board computer system by the mobile device;
- authenticating the first passenger identifier by the on-board computer system;
- determining a second passenger identifier based on the first passenger identifier by the on-board computer system;
- matching of a seating plan with the determined second passenger identifier by the on-board computer system, wherein the seating plan associates a passenger seat number with the second passenger identifier;
- providing the order and the passenger seat number by the on-board computer system.

An in-flight service is any service that is provided inside an aircraft. For example, the in-flight service may be provided by a crew of the aircraft. For example, the in-flight service may be provided during a flight of the aircraft, before take-off or after landing. For example, an in-flight service may be a refreshment, food, a beverage, a blanket, a pillow, or headphones, that is delivered by the crew of the aircraft to a passenger, whereas the passenger is assigned to a single passenger seat. An in-flight service may comprise a physical object that is delivered to the passenger seat. The in-flight service may be a physical in-flight service that may be consumed or used during the flight. An in-flight service may be a service such as a massage, which the passenger receives inside the aircraft. The aircraft is for example a plane or a Zeppelin or any other aircraft with assigned passenger seats. The aircraft comprises an on-board computer system. The on-board computer system is configured to process orders of in-flight services from passengers. The on-board computer system may comprise a stationary computer in the aircraft and/or a mobile device in the aircraft, such as a tablet of the crew. The on-board computer system may comprise a point-of-sale computer system. The on-board computer system may be utilized by the crew of the aircraft. The passenger has a mobile device, which is connected to the on-board computer system. The connection may be wireless, for example via a local network, such as WiFi or Bluetooth. The connection may be effected via the internet. The mobile device has access to a first passenger identifier. The mobile device may comprise an app for ordering in-flight services, wherein the app may be provided by an app provider. The first passenger identifier is secret, i.e., not publicly known. The first passenger identifier is known by the mobile device. The first passenger identifier may comprise a bitstring, that is associated with the passenger. The bitstring may be a 64-bit bitstring. The first passenger identifier preferably can not be determined based on any personal information of the passenger, such as a name, a date of birth or a passport number. The first passenger identifier is secret but does not comprise personal data of the passenger.

Prior to the steps of the disclosed method, the passenger has entered an order of at least one in-flight service in the mobile device. For example, the passenger may have used the app to enter an order of one unit of a specific beverage. The app may provide a list of available in-flight services.

In a first step of the disclosed method, the mobile device forwards the order of the at least one in-flight service and the first passenger identifier to the on-board computer system. Forwarding is effected via the connection to the on-board computer system. For example, the order of at least one in-flight service and the first passenger identifier may be forwarded by uploading to the internet, for example to a server of the app provider whereas the server of the app provider may send the order of the at least one in-flight service and the first passenger identifier to the on-board computer system. Alternatively, the mobile device may forward the order of the at least one in-flight service and the first passenger identifier directly to the on-board computer system, for example, via a WiFi or Bluetooth connection.

The on-board computer system receives the order of the at least one in-flight service and the first passenger identifier and authenticates the first passenger identifier. The on-board computer system may have access to a list of valid first passenger identifiers and may compare the first passenger identifier to the list.

The on-board computer system determines a second passenger identifier based on the first passenger identifier. The second passenger identifier comprises information, which can be used to associate the passenger with a passenger seat number. For example, the second passenger identifier may comprise at least one of a name, a date of birth, a booking number, and a passport number of the passenger. The first passenger identifier is not directly associated with the passenger seat number. However, the first passenger identifier is associated with the second passenger identifier, whereas the second passenger identifier is associated with the passenger seat by means of a seating plan. The first passenger identifier may be different from the second passenger identifier. The second passenger identifier may comprise personal data of the passenger.

The on-board computer system has access to the seating plan, wherein the seating plan associates a passenger seat number with the second passenger identifier. The seating plan may be specific for each individual flight. The on-board computer system matches the seating plan with the determined second passenger identifier. Thus, the on-board computer system matches the order to a seat number, i.e., the passenger seat number of the passenger. The passenger does not need to enter their passenger seat number or any other flight-specific information manually into the mobile device.

In the next step, the on-board computer system provides the order and the passenger seat number. Providing may comprise displaying the order and the passenger seat number on an electronic display or printing the order and the passenger seat number, such that the crew of the aircraft can notice. Providing may be responsive to a successful authentication of the first passenger identifier by the on-board computer system. The order and the passenger seat number may be provided on a tablet or a mobile device of at least one crew member, such as a steward or a stewardess. The crew member may then proceed to deliver the ordered in-flight service as stated in the provided order to the passenger in the provided passenger seat number. The crew member does not necessarily have to interact with the passenger prior to delivering the order. Since the passenger ordered the in-flight service via the mobile device of the passenger, the crew member is not involved in ordering but only involved in delivering the ordered in-flight service to the passenger seat of the passenger. In summary, the disclosed method provides a high degree of automation. The crew of the aircraft saves time and additionally, the passenger does not need to manually enter information other than the order of the in-flight service. In addition, the method provides an increased security for the passenger. Since the first passenger identifier is secret, a malicious third party cannot order in-flight services for the passenger as long as the secret identifier is secure.

Optionally, authenticating the first passenger identifier includes transmitting the first passenger identifier to a passenger server, whereas the passenger server confirms an authenticity of the first passenger identifier to the on-board computer system. The passenger server may be the server of the app provider, for example. The passenger server may have access to the first passenger identifier, for example, the passenger server may have a list of valid first passenger identifiers prior to receiving the first passenger identifier from the on-board computer system, and is therefore able to confirm an authenticity of a received first passenger identifier. The passenger server may send a confirmation of the authenticity of the first passenger identifier to the on-board computer system.

The (secret) first passenger identifier is known by at least one of the on-board computer system and the passenger server.

For example, determining the second passenger identifier may include transmitting the first passenger identifier to a passenger server, whereas the passenger server has access to the second passenger identifier, whereas the second passenger identifier is associated with the first passenger identifier, whereas the passenger server sends the second passenger identifier to the on-board computer system. The passenger sever may for example be the server of the app provider. The passenger server may securely store the second passenger identifier and may forward the second passenger identifier to the on-board computer system responsive to receiving the first passenger identifier from the on-board computer system.

The second passenger identifier may comprise at least one of a name, a date of birth, a booking number, and a passport number of the passenger. The booking number of the passenger may be associated with the passenger and a flight of the aircraft, which the passenger has booked. Optionally, the second passenger identifier may comprise at least two of a name, a date of birth, a booking number, and a passport number of the passenger. By using two separate items, the probability of two passengers having the same second passenger identifier is low.

The seating plan may comprise pairs of passenger seats and second passenger identifiers.

Optionally, the mobile device may have access to payment information, wherein forwarding includes forwarding the payment information, comprising the further step:
- verifying the received payment information by the on-board computer system.
Payment information may for example comprise information of a credit card of the passenger. The on-board system may verify the payment by uploading the payment information to a provider of a payment service associated with the payment information. For example, the credit card may be provided by a credit card provider.

Optionally, the method may comprise the further step:
- requesting payment for the selected on-board service using the received payment information by the on-board computer system;
wherein the on-board computer system is connected to the internet.

The on-board computer system may, for example, send a received credit card information to the credit card provider via the internet. The credit card provider may authorize the requested payment in order for the passenger to pay for the order and inform the on-board computer system of the authorized payment. The on-board computer system may reject the order in case the requested payment is declined. By requesting payment for the selected in-flight service, the process of ordering the in-flight service can be further automatized. The passenger does not need to interact with the crew in order to pay for the ordered in-flight service.

Optionally, providing comprises providing a visual output of the selected order and the passenger seat number. The visual output may be provided on an electronic display, for example an electronic display mounted in the aircraft or a mobile device of the crew of the aircraft, for example.

Optionally, the mobile device may receive a confirmation, that the order is being processed. Optionally, the mobile device may display the confirmation for the passenger.

The disclosure further concerns an on-board computer system for processing orders for in-flight services in an aircraft, comprising means for carrying out the following steps:
- receiving an order for an in-flight service and a first passenger identifier from a mobile device, wherein the first passenger identifier comprises a customer number previously assigned by an app provider,;
- authenticating the first passenger identifier by the on-board computer system;
- determining a second passenger identifier based on the first passenger identifier;
- matching of a seating plan with the determined second passenger identifier, wherein the seating plan associates a passenger seat number with the second passenger identifier;
- providing the order and the passenger seat number.

Furthermore, the disclosure concerns a computer system for data processing, in particular for processing orders of in-flight services in an aircraft, comprising:
- an on-board computer system according to the invention; and
- a mobile device of a passenger, wherein the mobile device is configured to register an order for an in-flight service, whereas the mobile device is connected to the on-board computer system of the aircraft, whereas the mobile device comprises means for carrying out the step:
   - forwarding the order and the first passenger identifier to the on-board computer system.

By way of example, the disclosure is further explained with respect to some selected embodiments shown in the drawings, However, these embodiments shall not be considered limiting for the disclosure.
Fig. 1 schematically shows a sequence diagram of the method for ordering in-flight services in an aircraft.
Fig. 2 schematically shows a sequence diagram of another embodiment of the method for ordering in-flight services in an aircraft.
Fig. 3 schematically shows a sequence diagram of another embodiment of the method for ordering in-flight services in an aircraft including the transmission of payment information.
Fig. 4 schematically shows a computer system for data processing, in particular for processing orders of in-flight services in an aircraft, with an on-board computer system and a mobile device of a passenger as well as a passenger server.

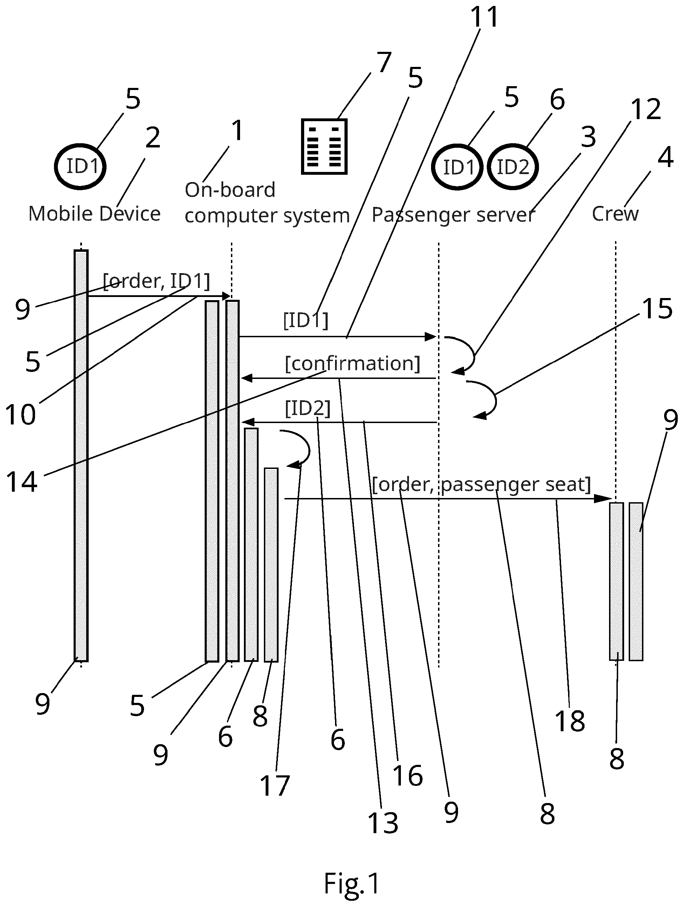

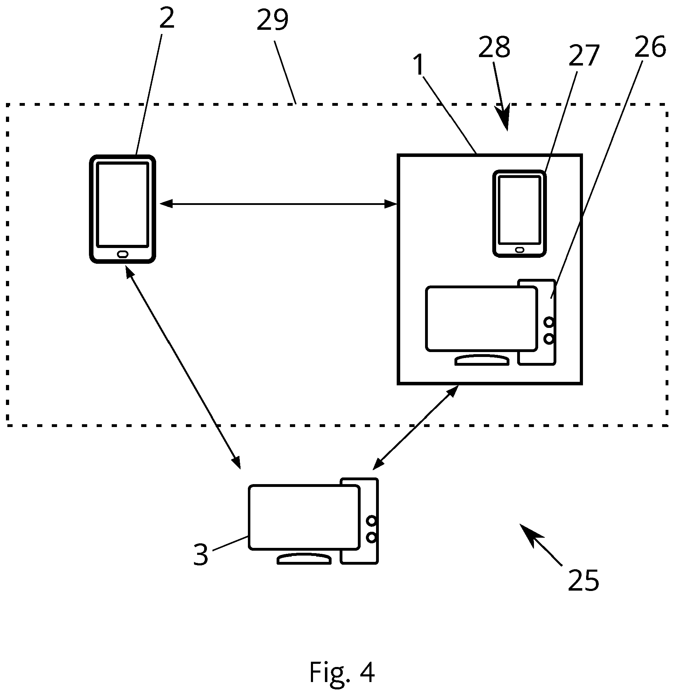

Fig. 1 schematically shows a sequence diagram of the method for ordering in-flight services in an aircraft. The depicted embodiment of the disclosed method involves an on-board computer system 1 (details see fig. 4), a mobile device 2 of a passenger of the aircraft as well as a passenger server 3 and the crew 4 of the aircraft. The mobile device 2, the on-board computer system 1 and the crew 4 are on board of the aircraft. In this embodiment, the aircraft is a plane (not depicted). The mobile device 2 and the on-board computer system 1 are each connected to the internet. Therefore, the mobile device 2 is connected to the on-board computer system 1. In addition, the passenger server 3 is connected to the internet, hence the passenger server 3 is connected to the on-board computer system 1 and the mobile device 2. The mobile device 2 of the passenger comprises an app for ordering in-flight services. The app is provided by an app provider.

The mobile device 2 has access to a first passenger identifier 5. The first passenger identifier 5 comprises a customer number associated with the passenger. The customer number was previously assigned to the passenger by the app provider via the app. In addition to the mobile device 2, the passenger server 3 has access to the first passenger identifier 5. The first passenger identifier 5 is not public. The passenger server is a server of the app provider. The passenger server 3 has, in addition to the first passenger identifier 5, access to a second passenger identifier 6. The second passenger identifier 6 comprises a name and date of birth of the passenger. The on-board computer system 1 has access to a seating plan 7, wherein the seating plan 7 associates a passenger seat number 8 with the second passenger identifier 6.

The passenger is inside the aircraft and on a flight. The passenger has entered an order 9 of an in-flight service into the mobile device 2. Specifically, the order 9 concerns a cup of coffee.

In a first step of the depicted sequence diagram, the mobile device 2 forwards 10 the order 9 and the first passenger identifier 5 (indicated by "ID1") to the on-board computer system 1. The on-board computer system then authenticates the first passenger identifier 5. Authenticating is effected by transmitting 11 the first passenger identifier 5 to the passenger server 3. The passenger server 3 has access to the first passenger identifier 5, i.e., the passenger server 3 has a list of valid first passenger identifiers. The passenger server 3 checks 12 the validity of the received first passenger identifier 5 by checking if the received first passenger identifier 5 is in the list of valid first passenger identifiers. The passenger server 3 finds the received first passenger identifier 5 in the list of valid first passenger identifiers and therefore confirms 13 an authenticity the first passenger identifier 5 to the on-board computer system 1 by sending a confirmation 14 of the validity of the first passenger identifier to the on-board computer system 1.

The on-board computer system 1 determines the second passenger identifier 6 based on the first passenger identifier 5. In this embodiment, determining the second passenger identifier 6 based on the first passenger identifier 5 includes transmitting 11 the first passenger identifier to the passenger server 3. The second passenger identifier 6 is associated with the first passenger identifier 5. The passenger server 3 (internally) queries 15 the second passenger identifier 6 associated with the first passenger identifier 5 and then sends 16 the second passenger identifier 6 to the on-board computer system 1. In this exemplary embodiment, the second passenger identifier 6 is a passport number of the passenger.

In a next step, the on-board computer system 1 matches 17 the seating plan 7 with the determined second passenger identifier 6. The on-board computer system 1 can consequently match the order 9 to the passenger seat number 8, i.e., the passenger seat number 8 to which the order 9 is to be delivered by the crew 4. In this exemplary embodiment the passenger seat number 8 is "11A".

In a last step of the method, the on-board computer system 1 provides 18 the order 9 and the passenger seat number 8. Providing 18 includes providing a visual output of the selected order 9 and the passenger seat number 8. In this embodiment, the order 9 and the passenger seat number 8 are displayed on a tablet 27 (see fig. 4) of the crew 4.

The crew is notified of the order 9 and proceeds to prepare the order 9, in this case the ordered cup of coffee is prepared accordingly. The ordered cup of coffee is then delivered within the aircraft to the passenger seat identified by the passenger seat number 8, i.e., seat number "11A". The passenger in the passenger seat receives the order, i.e., the ordered cup of coffee, from the crew 4 and pays upon receiving the ordered cup of coffee. The passenger pays in cash but could alternatively also use a credit card, for example. Since the first passenger identifier 5 is secret and not known to any other passengers on the flight or any other malicious third party, only the passenger can order in-flight services in the name of the passenger.

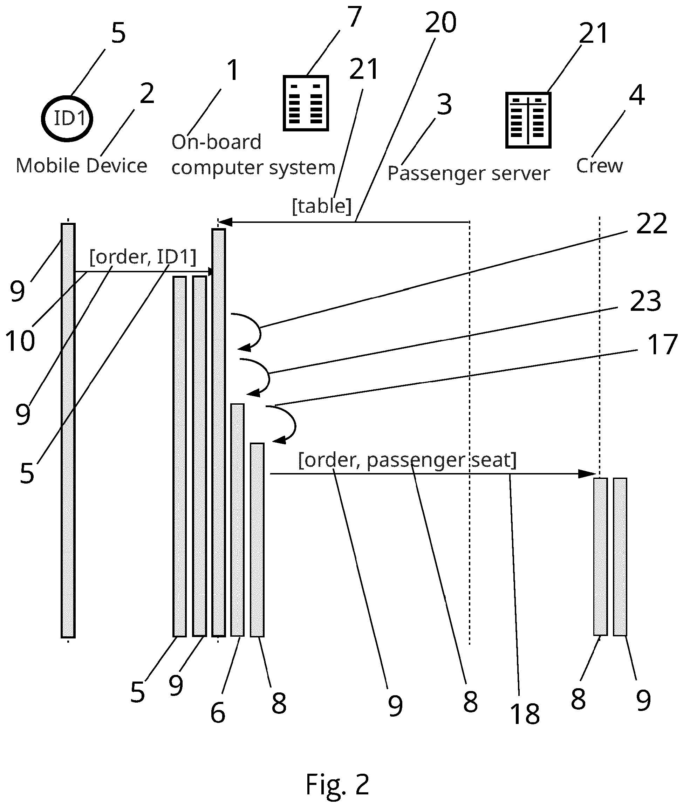

Fig. 2 schematically shows a sequence diagram of another embodiment of the method for ordering in-flight services in an aircraft. Compared to the embodiment of fig. 1, the on-board computer system 1 has queried 20 a table 21 of valid first passenger identifiers and second passenger identifiers from the passenger server 3 beforehand, i.e., before the flight. For querying the table 21, the on-board computer system has sent a list of second passenger identifiers of all passengers of the (upcoming) flight to the passenger server 3. The passenger server 3 has compiled the table 21, which contains all valid first passenger identifiers which are connected to the received second passenger identifiers. In this embodiment, neither the mobile device 2 nor the on-board computer system 1 have an internet connection during the flight and are therefore offline. The mobile device 2 and the on-board computer system 1 are connected by means of a Bluetooth connection. Alternatively, the mobile device 2 and the on-board computer system 1 could be connected by means of any wireless connection. The passenger server has access to the table 21. The table 21 of valid first passenger identifiers and second passenger identifiers comprises a list of all passengers of the flight, i.e., a list of second passenger identifiers of all passengers on the flight. In addition, the table 21 shows all first passenger identifiers of those passengers, that have a first passenger identifier assigned. Therefore, the on-board computer system 1 has access to the first passenger identifier 5 and to the second passenger identifier 6 during the flight as both are included in the queried table 21.

The exchange of the list of second passenger identifiers with the passenger server 3 may also be performed in the embodiment of fig. 1, optionally together with information allowing the passenger server 3 to contact the on-board computer system during the flight (e.g. flight information or a direct address). The passenger server 3 may be contacted directly from the mobile device 2 to forward an order 9. In this case, the passenger server 3 may resolve the flight information previously received and stored for the duration of the flight. Alternatively, the mobile device 2 may gather flight information automatically from its environment (i.e. inside the aircraft), for example, from an available (but optionally unconnected) wireless network or from a detected (by a positioning system of the mobile device) geographic location (and, hence, airport) and timestamp during take-off. The passenger server 3 then forwards the received order to the appropriate on-board computer system 1 for delivery.

Compared to the embodiment of fig. 1, the on-board computer system 1 in the embodiment of fig. 2 authenticates the first passenger identifier 5 by checking 22 the validity of the received first passenger identifier 5 by checking if the received first passenger identifier 5 is in the table 21 of valid first passenger identifiers and second passenger identifiers. Determining 23 the second passenger identifier 6 based on the first passenger identifier 5 is effected by looking up the second passenger identifier 6 associated with the first passenger identifier 5 in the table 21 of valid first passenger identifiers and second passenger identifiers.

In a next step, the on-board computer system 1 matches 17 the seating plan 7 with the determined second passenger identifier 6. The on-board computer system 1 can consequently match the order 9 to the passenger seat number 8. In a last step of the method, the on-board computer system 1 provides 18 the order 9 and the passenger seat number 8.

Optionally, the mobile device 2 additionally has access to payment information 24. The step forwarding 10 includes forwarding the payment information 24 to the on-board computer system 1 in addition to the order 9 and the first passenger identifier 5. The on-board computer system 1 connects to the internet after the flight has been conducted and uses the order 9 of the passenger as well as the payment information 24 to request the payment. Alternatively, the on-board computer system 1 may upload the (already processed) order 9 together with the payment information 24 to a main server of the airline (associated with the aircraft), whereas the main server processes the payment by means of the payment information 24. The main server receives data from the aircraft and receives all information from the on-board computer system 1 about the purchases (i.e., orders) of the preceding flight and allocate the amounts to be withdrawn to the individual user account of the respective passenger. The main server may initiate the payment process for the individual user accounts (i.e., the individual passengers).

In general, the passenger may either pay for the order 9 upon receiving the order 9 in cash or, for example, by means of a credit card in the aircraft, or the payment for the order 9 may be processed automatically by means of the payment information 24. The payment may be processed automatically during the flight in case the on-board computer system 1 is connected to the internet, or may be processed automatically after the flight, when the on-board computer system 1 is connected to the internet.

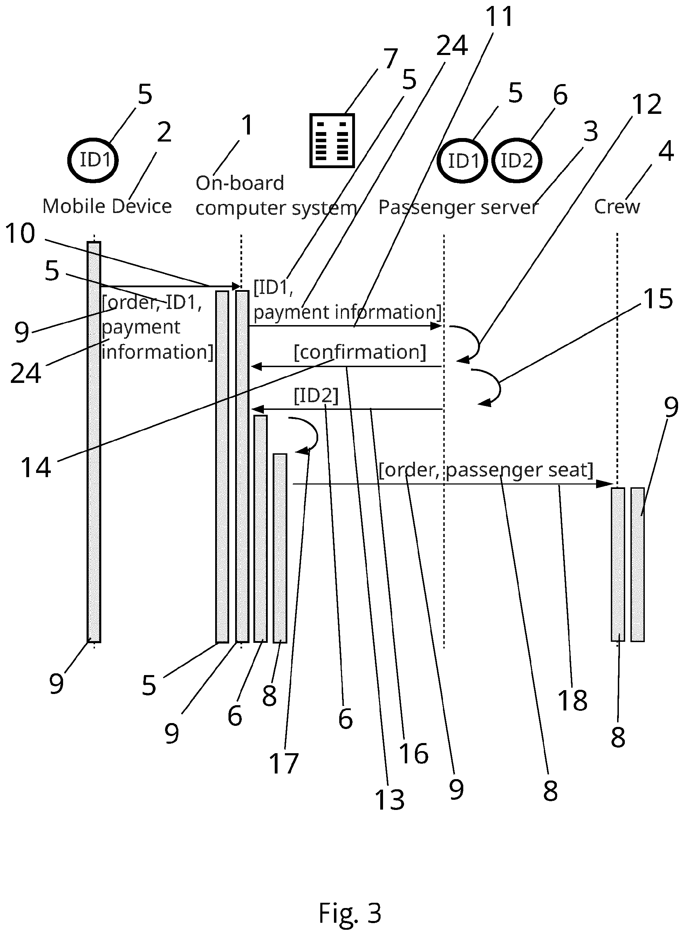

Fig. 3 schematically shows a sequence diagram of a third embodiment of the method for ordering in-flight services in an aircraft, which is similar to the embodiment of fig. 1. Compared to fig. 1, the mobile device 2 additionally has access to payment information 24. The step forwarding 10 includes forwarding the payment information 24 to the on-board computer system 1 in addition to the order 9 and the first passenger identifier 5. The on-board computer system 1 verifies the payment information 24 by transmitting 11 the payment information 24 together with the first passenger identifier 5 to the passenger server 3. The passenger server 3 checks 12 the validity of the received first passenger identifier 5 by checking if the received first passenger identifier 5 is in the list of valid first passenger identifiers and checks 12 the validity of the received payment information 24. The passenger server 3 finds the received first passenger identifier 5 in the list of valid first passenger identifiers. The payment information 24 comprises details of a credit card associated with the passenger. The passenger server 3 checks the validity of the payment information 24 by contacting a credit card provider of the credit card of the passenger. The credit card provider approves the payment information 24. Consequently, the passenger server 3 confirms 13 an authenticity of the first passenger identifier 5 to the on-board computer system 1 by sending a confirmation 14 of the validity of the first passenger identifier 5 to the on-board computer system 1. In this exemplary embodiment, the confirmation 14 also confirms the validity of the payment information 24. Therefore, the on-board computer system 1 has verified the received payment information 24. Optionally, the on-board computer system 1 may request payment for the selected on-board service using the received payment information 24 by the on-board computer system **1.** In yet another embodiment, the on-board computer system 1 receives the payment information 24 from the passenger server 3 together with the confirmation 14 of the first passenger identifier 5 and the second passenger identifier **6.**

In yet another embodiment, the crew ensures that the seating plan 7 is updated before the flight. A main server provides information to on-board computer system 1 about which of the passengers being on the upcoming flight do have a valid first passenger identifier 5 (i.e., an account in the app) and for which passengers the registered payment method is valid. In other words, the seating plan 7 of the on-board computer system 1 is compared against the user account list of the app provider, to check which of the passengers being present on the upcoming flight do hold a valid account in the app. In addition, the app provider may provide information on one or more valid payment methods associated with the passenger to the on-board computer system 1. Passengers who have the app installed connect with an offered wireless network (within the aircraft) of the aircraft so to be able to communicate with the on-board computer system 1 in the aircraft. The passenger opens the app on their mobile device 2 and enters an order 9 of an in-flight service into the mobile device 2. The crew then receives a pop-up message on their tablet 27 (see fig. 4) stating that the passenger located on "Seat 11A" (for example) has ordered a glass of water. The crew prepares the individual ordered product as indicated in the order 9 and delivers it to the passenger. The passenger will receive the ordered product by the cabin crew without any prior verbal or physical interaction. After having delivered the ordered product to the individual passenger, the crew clicks a button on their tablet 27 to confirm that the passenger has been served with the ordered product. An information data transfer will be sent to the on-board computer system 1, which includes the conformation that the order 9 has been served. Optionally, the mobile device 2 and/or the app provider may receive a confirmation that the ordered product has been delivered to the passenger. Optionally, the passenger receives a pop-up notification on the mobile device 2 via the App informing them of the ordered product as well as an upcoming payment. For example, the following text may be displayed on the mobile device 2 of the passenger: "Thank you very much for your order. The amount of "3 EUR" will be withdrawn from your credit card.". The payment information 24 is used by the on-board computer system 1 to withdraw the specified amount of money to receive payment for the order 9.

Fig. 4 shows a network 25 for processing orders of in-flight services in an aircraft. The network 25 comprises a computer system 29 for data processing, in this example for processing orders of in-flight services in an aircraft. The computer system 29 comprises an on-board computer system 1 and a mobile device 2 of a passenger. The mobile device 2 is a smartphone in this example. Alternatively, the mobile device 2 may be a tablet or a laptop of the passenger, for example. The mobile device 2 is configured to register an order 9 for an in-flight service. The mobile device is connected to the internet and is connected to the on-board computer system of the aircraft. The mobile device 2, i.e., the smartphone, comprises means for carrying out the step:
- forwarding the order and the first passenger identifier to the on-board computer system.

The network 25 comprises the on-board computer system 1 for processing orders for in-flight services in an aircraft. The on-board computer system 1 comprises means 28 for carrying out the following steps
- receiving an order 9 for an in-flight service and a first passenger identifier 5 (see figs 1-3) from the mobile device 2;
   - authenticating the first passenger identifier 5;
   - determining a second passenger identifier 6 based on the first passenger identifier 5;
   - matching of a seating plan 7 with the determined second passenger identifier 6, wherein the seating plan 7 associates a passenger seat number 8 with the second passenger identifier 6;
   - providing the order 9 and the passenger seat number 8.

The means 28 of the on-board computer system 1 comprise a stationary computer 26 and a tablet 27. The tablet 27 is used by a crew 4. The order 9 and the passenger seat number 8 is provided by displaying on the tablet 27.

Both the on-board computer system 1 and the mobile device 2 are on-board of the aircraft (not depicted). Both the on-board computer system 1 and the mobile device 2 are connected to the internet and are therefore connected to each other.

The network comprises a passenger server 3. The passenger server comprises a computer. The mobile device 2 comprises an app for ordering in-flight services in the aircraft. The app is provided by an app provider, whereas the passenger server 3 is a server of the app provider. The passenger server 3 has access to the first passenger identifier 5 and the second passenger identifier 6 as well as to payment information 24 associated with the passenger. The passenger has downloaded the app and has set up an account. The app provider has assigned the first passenger identifier 5 to the passenger. The passenger has shared their payment information 24 with the app. The passenger can order in-flight services in any aircraft that is equipped with the on-board computer system 1.

## Claims

1. Method for ordering in-flight services in an aircraft, wherein the aircraft comprises an on-board computer system (1), wherein a mobile device (2) of a passenger is connected to the on-board computer system (1), wherein the mobile device (2) has access to a first passenger identifier (5), wherein the first passenger identifier (5) comprises a customer number previously assigned by an app provider, comprising the following steps:
- forwarding an order (9) of at least one in-flight service and the first passenger identifier (5) to the on-board computer system (1) by the mobile device (2);
- authenticating the first passenger identifier (5) by the on-board computer system (1);
- determining a second passenger identifier (6) based on the first passenger identifier (5) by the on-board computer system (1);
- matching of a seating plan (7) with the determined second passenger identifier (6) by the on-board computer system (1), wherein the seating plan (7) associates a passenger seat number (8) with the second passenger identifier (6);
- providing the order (9) and the passenger seat number (8) by the on-board computer system (1).

2. Method according to claim 1, **characterized in that** authenticating the first passenger identifier (5) includes transmitting the first passenger identifier (5) to a passenger server (3), whereas the passenger server (3) confirms an authenticity of the first passenger identifier (5) to the on-board computer system (1).

3. Method according to claim 1 or claim 2, **characterized in that** determining the second passenger identifier (6) includes transmitting the first passenger identifier (5) to the passenger server (3), whereas the passenger server (3) has access to the second passenger identifier (6), whereas the second passenger identifier (6) is associated with the first passenger identifier (5), whereas the passenger server (3) sends the second passenger identifier (6) to the on-board computer system (1).

4. Method according to any one of the previous claims, **characterized in that** the first passenger identifier (5) comprises a customer number.

5. Method according to any one of the previous claims, **characterized in that** the second passenger identifier (6) comprises at least one of a name, a date of birth, a booking number, and a passport number of the passenger.

6. Method according to any one of the previous claims, **characterized in that** the mobile device (2) has access to payment information (24), wherein forwarding includes forwarding the payment information, comprising the further step:
- verifying the received payment information (24) by the on-board computer system (1).

7. Method according to claim 6, **characterized by** the further step:
- requesting payment for the selected on-board service using the received payment information (24) by the on-board computer system (1);
wherein the on-board computer system (1) is connected to the internet.

8. Method according to any one of the previous claims, **characterized in that** providing comprises providing a visual output of the selected order (9) and the passenger seat number (8).

9. On-board computer system (1) for processing orders for in-flight services in an aircraft, comprising means (28) for carrying out the following steps:
- receiving an order (9) for an in-flight service and a first passenger identifier (5) from a mobile device (2), wherein the first passenger identifier (5) comprises a customer number previously assigned by an app provider;
- authenticating the first passenger identifier (5);
- determining a second passenger identifier (6) based on the first passenger identifier (5);
- matching of a seating plan (7) with the determined second passenger identifier (6), wherein the seating plan (7) associates a passenger seat number (8) with the second passenger identifier (6);
- providing the order (9) and the passenger seat number (8).

10. Computer system (29) for data processing, in particular for processing orders of in-flight services in an aircraft, comprising:
- an on-board computer system (1) according to claim 9; and
- a mobile device (2) of a passenger, wherein the mobile device (2) is configured to register an order (9) for an in-flight service, whereas the mobile device (2) is connected to the on-board computer system (1) of the aircraft, whereas the mobile device (2)comprises means for carrying out the step:
- forwarding the order (9) and the first passenger identifier (5) to the on-board computer system (1).

## Patentansprüche

1. Verfahren zum Bestellen von Borddienstleistungen in einem Flugzeug, wobei das Flugzeug ein Bordcomputersystem (1) umfasst, wobei ein mobiles Gerät (2) eines Passagiers mit dem Bordcomputersystem (1) verbunden ist, wobei das mobile Gerät (2) Zugriff auf eine erste Passagierkennung (5) hat, umfassend die folgenden Schritte:
- Weiterleiten einer Bestellung (9) mindestens einer Borddienstleistung und der ersten Passagierkennung (5) an das Bordcomputersystem (1) durch das mobile Gerät (2);
- Authentifizieren der ersten Passagierkennung (5) durch das Bordcomputersystem (1);
- Bestimmen einer zweiten Passagierkennung (6) basierend auf der ersten Passagierkennung (5) durch das Bordcomputersystem (1);
- Abgleichen eines Sitzplans (7) mit der bestimmten zweiten Passagierkennung (6) durch das Bordcomputersystem (1), wobei der Sitzplan (7) eine Passagiersitznummer (8) mit der zweiten Passagierkennung (6) verknüpft;
- Bereitstellen der Bestellung (9) und der Passagiersitznummer (8) durch das Bordcomputersystem (1).

2. Verfahren nach Anspruch 1, **dadurch gekennzeichnet, dass** das Authentifizieren der ersten Passagierkennung (5) das Übertragen der ersten Passagierkennung (5) an einen Passagierserver (3) beinhaltet, wobei der Passagierserver (3) dem Bordcomputersystem (1) eine Authentizität der ersten Passagierkennung (5) bestätigt.

3. Verfahren nach Anspruch 1 oder Anspruch 2, **dadurch gekennzeichnet, dass** das Bestimmen der zweiten Passagierkennung (6) das Übertragen der ersten Passagierkennung (5) an den Passagierserver (3) beinhaltet, wobei der Passagierserver (3) Zugriff auf die zweite Passagierkennung (6) hat, wobei die zweite Passagierkennung (6) mit der ersten Passagierkennung (5) verknüpft ist, wobei der Passagierserver (3) die zweite Passagierkennung (6) an das Bordcomputersystem (1) sendet.

4. Verfahren nach einem der vorhergehenden Ansprüche, **dadurch gekennzeichnet, dass** die erste Passagierkennung (5) eine Kundennummer umfasst.

5. Verfahren nach einem der vorhergehenden Ansprüche, **dadurch gekennzeichnet, dass** die zweite Passagierkennung (6) mindestens eines von einem Namen, einem Geburtsdatum, einer Buchungsnummer und einer Reisepassnummer des Passagiers umfasst.

6. Verfahren nach einem der vorhergehenden Ansprüche, **dadurch gekennzeichnet, dass** das mobile Gerät (2) Zugriff auf Zahlungsinformationen (24) hat, wobei das Weiterleiten das Weiterleiten der Zahlungsinformationen beinhaltet, umfassend den weiteren Schritt:
- Verifizieren der empfangenen Zahlungsinformationen (24) durch das Bordcomputersystem (1).

7. Verfahren nach Anspruch 6, **gekennzeichnet durch** den weiteren Schritt:
- Anfordern der Zahlung für den ausgewählten Bordservice unter Verwendung der empfangenen Zahlungsinformationen (24) durch das Bordcomputersystem (1);
wobei das Bordcomputersystem (1) mit dem Internet verbunden ist.

8. Verfahren nach einem der vorhergehenden Ansprüche, **dadurch gekennzeichnet, dass** das Bereitstellen das Bereitstellen einer visuellen Ausgabe der ausgewählten Bestellung (9) und der Passagiersitznummer (8) umfasst.

9. Bordcomputersystem (1) zum Verarbeiten von Bestellungen für Borddienstleistungen in einem Flugzeug, umfassend Mittel (28) zum Ausführen der folgenden Schritte:
- Empfangen einer Bestellung (9) für eine Borddienstleistung und einer ersten Passagierkennung (5) von einem mobilen Gerät (2);
- Authentifizieren der ersten Passagierkennung (5);
- Bestimmen einer zweiten Passagierkennung (6) basierend auf der ersten Passagierkennung (5);
- Abgleichen eines Sitzplans (7) mit der bestimmten zweiten Passagierkennung (6), wobei der Sitzplan (7) eine Passagiersitznummer (8) mit der zweiten Passagierkennung (6) verknüpft;
- Bereitstellen der Bestellung (9) und der Passagiersitznummer (8).

10. Computersystem (29) zur Datenverarbeitung, insbesondere zum Verarbeiten von Bestellungen von Borddienstleistungen in einem Flugzeug, umfassend:
- ein Bordcomputersystem (1) nach Anspruch 9; und
- ein mobiles Gerät (2) eines Passagiers, wobei das mobile Gerät (2) konfiguriert ist, um eine Bestellung (9) für eine Borddienstleistung zu registrieren, wobei das mobile Gerät (2) mit dem Bordcomputersystem (1) des Flugzeugs verbunden ist, wobei das mobile Gerät (2) Mittel zum Ausführen des Schrittes umfasst:
- Weiterleiten der Bestellung (9) und der ersten Passagierkennung (5) an das Bordcomputersystem (1).

## Revendications

1. Procédé de commande de services à bord dans un aéronef, dans lequel l'aéronef comprend un système informatique de bord (1), dans lequel un dispositif mobile (2) d'un passager est connecté au système informatique de bord (1), dans lequel le dispositif mobile (2) a accès à un premier identifiant de passager (5), comprenant les étapes suivantes :
- transmission d'une commande (9) d'au moins un service à bord et du premier identifiant de passager (5) au système informatique de bord (1) par le dispositif mobile (2) ;
- authentification du premier identifiant de passager (5) par le système informatique de bord (1) ;
- détermination d'un deuxième identifiant de passager (6) sur la base du premier identifiant de passager (5) par le système informatique de bord (1) ;
- mise en correspondance d'un plan des sièges (7) avec le deuxième identifiant de passager (6) déterminé par le système informatique de bord (1), dans lequel le plan des sièges (7) associe un numéro de siège de passager (8) au deuxième identifiant de passager (6) ;
- fourniture de la commande (9) et du numéro de siège de passager (8) par le système informatique de bord (1).

2. Procédé selon la revendication 1, **caractérisé en ce que** l'authentification du premier identifiant de passager (5) comprend la transmission du premier identifiant de passager (5) à un serveur de passagers (3), dans lequel le serveur de passagers (3) confirme au système informatique de bord (1) une authenticité du premier identifiant de passager (5).

3. Procédé selon la revendication 1 ou la revendication 2, **caractérisé en ce que** la détermination du deuxième identifiant de passager (6) comprend la transmission du premier identifiant de passager (5) au serveur de passagers (3), dans lequel le serveur de passagers (3) a accès au deuxième identifiant de passager (6), dans lequel le deuxième identifiant de passager (6) est associé au premier identifiant de passager (5), dans lequel le serveur de passagers (3) envoie le deuxième identifiant de passager (6) au système informatique de bord (1).

4. Procédé selon l'une quelconque des revendications précédentes, **caractérisé en ce que** le premier identifiant de passager (5) comprend un numéro de client.

5. Procédé selon l'une quelconque des revendications précédentes, **caractérisé en ce que** le deuxième identifiant de passager (6) comprend au moins l'un d'un nom, d'une date de naissance, d'un numéro de réservation et d'un numéro de passeport du passager.

6. Procédé selon l'une quelconque des revendications précédentes, **caractérisé en ce que** le dispositif mobile (2) a accès à des informations de paiement (24), dans lequel la transmission comprend la transmission des informations de paiement, comprenant l'étape supplémentaire de :
- vérification des informations de paiement (24) reçues par le système informatique de bord (1).

7. Procédé selon la revendication 6, **caractérisé par** l'étape supplémentaire de :
- demande du paiement pour le service à bord sélectionné en utilisant les informations de paiement (24) reçues par le système informatique de bord (1) ;
dans lequel le système informatique de bord (1) est connecté à Internet.

8. Procédé selon l'une quelconque des revendications précédentes, **caractérisé en ce que** la fourniture comprend la fourniture d'une sortie visuelle de la commande (9) sélectionnée et du numéro de siège de passager (8).

9. Système informatique de bord (1) pour le traitement de commandes de services à bord dans un aéronef, comprenant des moyens (28) pour exécuter les étapes suivantes :
- réception d'une commande (9) pour un service à bord et d'un premier identifiant de passager (5) en provenance d'un dispositif mobile (2) ;
- authentification du premier identifiant de passager (5) ;
- détermination d'un deuxième identifiant de passager (6) sur la base du premier identifiant de passager (5) ;
- mise en correspondance d'un plan des sièges (7) avec le deuxième identifiant de passager (6) déterminé, dans lequel le plan des sièges (7) associe un numéro de siège de passager (8) au deuxième identifiant de passager (6) ;
- fourniture de la commande (9) et du numéro de siège de passager (8).

10. Système informatique (29) de traitement de données, en particulier pour le traitement de commandes de services à bord dans un aéronef, comprenant :
- un système informatique de bord (1) selon la revendication 9 ; et
- un dispositif mobile (2) d'un passager, dans lequel le dispositif mobile (2) est configuré pour enregistrer une commande (9) pour un service à bord, dans lequel le dispositif mobile (2) est connecté au système informatique de bord (1) de l'aéronef, dans lequel le dispositif mobile (2) comprend des moyens pour exécuter l'étape de :
- transmission de la commande (9) et du premier identifiant de passager (5) au système informatique de bord (1).
